# DEMANDE DE BREVET EUROPEEN

(11) **EP 1 647 445 A1**
(43) Date de publication de la demande: **19.04.2006**
(21) Numéro de dépôt: 05300811.6
(22) Date de dépôt: 13.10.2005
(51) Int. Cl.: B60P 3/04

(54) **Van**

(30) Priorité: 15.10.2004 FR 0410899
(71) Demandeur: PLF, 24230 Montcaret (FR)
(72) Inventeur: Fautras, Jean-Luc, 47120, SAINT SERNIN (FR)
(74) Mandataire: Fantin, Laurent

(57) **Abrégé**

L'objet de l'invention est un van comprenant un châssis (10), avec au moins un essieu (12) et des roues (14), caractérisé en ce qu'il comprend un premier volume (18) prévu pour accueillir des chevaux, volume qui intègre les roues (14) et présente une largeur hors tout égale à la distance séparant l'extérieur d'une roue (14) d'un essieu (12) de l'extérieur de l'autre roue du même essieu. Les chevaux sont disposés de façon oblique par rapport à l'axe de déplacement du véhicule.

## Description

La présente invention concerne un van avec intégration des roues comportant de plus un espace de service, notamment un espace de vie.

Les vans sont des remorques parfaitement adaptées pour le transport des chevaux. On connaît notamment les vans commercialisés sous la dénomination "oblique" par le présent déposant.

Ces vans permettent de disposer d'un volume important dédié aux chevaux et de respecter le gabarit routier. Seule la longueur varie pour permettre de disposer jusqu'à six chevaux.

Cet espace est aménagé pour éviter que les chevaux se blessent, avec des ouvertures autorisant le passage de la lumière. Le plancher est adapté pour ne pas glisser et l'arrière du plancher de ce volume peut être surbaissé selon un agencement ayant fait l'objet d'un brevet afin de permettre la montée et la descente des chevaux, sans difficultés.

On constate que les chevaux sont parfaitement positionnés et même si les déplacements sur route ne sont pas du meilleur effet sur ces animaux, ils s'effectuent dans les meilleures conditions.

De façon générale, les déplacements sont effectués par les cavaliers avec leurs montures pour participer à des réunions sportives dans des lieux donnés, généralement éloignés du lieu habituel de résidence de ces mêmes équipages.

De tels déplacements posent le problème du transport du matériel, relativement important pour cette pratique sportive et d'un espace de vie pour le cavalier. L'alimentation des chevaux est un problème puisque les réserves sont généralement stockées dans l'espace dédié aux chevaux mais il faut pouvoir nourrir les chevaux de façon adaptée une fois à l'arrêt, ce qui n'est pas toujours aisé.

Or il existe des espaces morts qu'il conviendrait d'optimiser.

Entre deux épreuves, ou préalablement à une épreuve ou encore à tout moment dans la journée, pour prendre une collation par exemple, surtout en cas de mauvais temps, le cavalier ne dispose d'aucun lieu de vie.

Il est donc requis par les pratiquants de pouvoir disposer d'un espace même réduit, permettant de s'allonger, de disposer d'une tablette, de rangements, voire d'un bac avec une source d'eau.

Un tel lieu de vie doit aussi pouvoir être éclairé. Ceci pose un problème car il convient nécessairement de conserver l'aérodynamisme du van. En effet, une structure volumique telle qu'un van, apte à rouler et qui perdrait son aérodynamisme, engendrerait des difficultés de traction par un véhicule. En effet, un van avec ses chevaux est d'un poids conséquent et la prise au vent est importante si bien qu'il faut nécessairement une forme aérodynamique à l'avant.

En plus de ces contraintes d'aménagement, il est un problème très important lié à la largeur utile intérieure. En effet, le problème est celui des passages de roues.

Les parois latérales des vans sont actuellement disposées à l'intérieur des roues en laissant celles-ci en saillie à l'extérieur avec des protections par garde-boue. Ceci réduit donc la largeur utile et il n'est pas possible de profiter de toute la largeur autorisée par le gabarit routier du pays concerné. Dans les pays où ce gabarit routier est déjà fortement limité par la législation, les parois disposées entre les passages de roues limitent proportionnellement encore plus le volume intérieur disponible.

Si les passages de roues sont intégrés à l'intérieur des parois, ils font saillie de façon dangereuse dans l'espace intérieur dédié aux chevaux transportés, surtout pendant les phases de roulage.

Un van résolvant ces différents problèmes et répondant aux contraintes exposées est maintenant décrit en détail en regard des dessins annexés dont les différentes figures représentent :
- Figure 1, une vue en élévation latérale droite du van selon la présente invention,
- Figure 2, une vue en coupe de dessus de ce même van,
- Figure 3, une vue en élévation latérale gauche du van selon la représente invention,
- Figure 4, une vue de l'arrière du même van, et
- Figure 5, une vue d'une coupe montrant les parois inclinées.

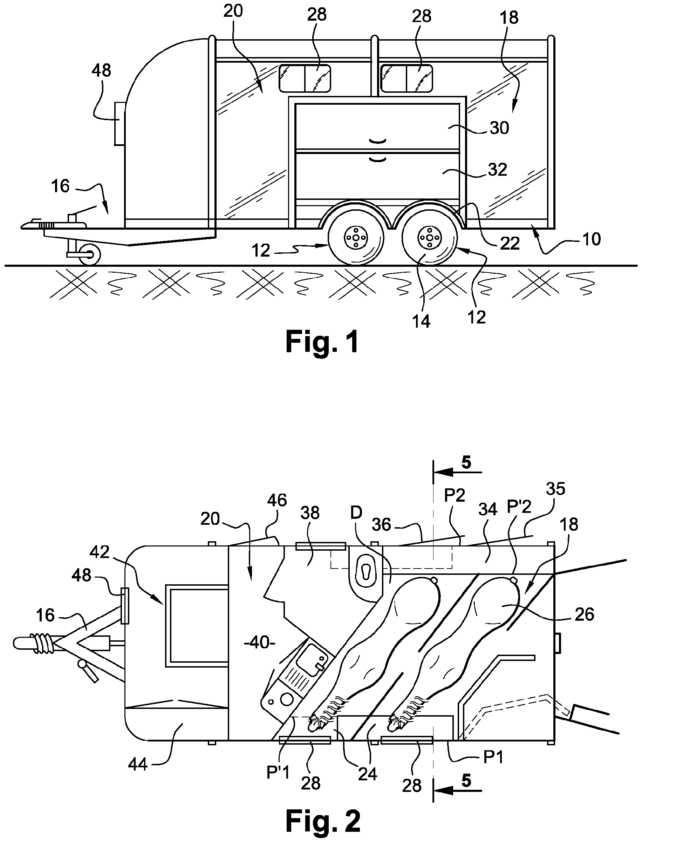

Sur les figures 1 et 2, on a représenté un van selon l'invention qui comprend de façon connue un châssis 10 équipé de trains roulants, en l'occurrence deux essieux 12 avec des roues 14, et une flèche 16 d'attelage.

Ce van comporte deux volumes, un premier volume 18 prévu pour accueillir les chevaux et un second volume 20 constituant un espace de service.

Le premier volume 18 est d'une largeur hors tout égale à la distance séparant l'extérieur d'une roue d'un essieu de l'extérieur de l'autre roue du même essieu. Les parois latérales P1 et P2 sont donc positionnées au droit de l'extérieur des roues, à la distance que permet le gabarit routier, selon la législation en vigueur.

De fait les roues 14 se trouvent sous des protège roues 22, eux-mêmes positionnés dans des réserves adaptées, ménagées dans le premier volume 18. Ces roues se trouvent intégrées dans ce volume 18.

Dans ce volume, il est prévu au moins un emplacement 24 pour recevoir un cheval 26, dans le mode de réalisation représenté, deux emplacements sont aménagés.

Il est à noter que les emplacements 24 sont orientés de façon préférentielle en oblique par rapport à l'axe de déplacement, la tête des chevaux se situant à proximité du côté gauche dans le cas représenté, en avant. Immédiatement au-dessus de chacun des chevaux, il est prévu une ouverture 28.

On constate que les têtes des animaux se situent sensiblement au-dessus des passages de roues. Il n'y a donc pas de gêne pour le cheval, ses antérieurs étant en retrait de la paroi P1. Le cheval est donc à l'aise et ne se trouve pas perturbé par ce volume en saillie à l'intérieur.

Il est alors possible de prévoir une paroi P'1 pour intégrer le passage de roues coté gauche en l'occurrence, disposée sous l'encolure des chevaux en l' occurrence.

Dans le mode de réalisation présenté, au droit des roues, toujours sur ce même côté gauche en l'occurrence, la paroi P1 du van selon l'invention comprend aussi deux modules 30 et 32 à ouverture en saillie sur l'extérieur.

Le premier module 30, sensiblement plan pour ne pas faire saillie à l'intérieur puisqu' il se trouve à la hauteur de la tête du cheval, permet de disposer d'une mangeoire lorsqu' il est basculé et de nourrir ainsi les chevaux en place dans le van à travers l'ouverture générée par la manoeuvre de ce premier module.

Le second module 32 peut être utilisé comme réserve de nourriture puisqu' il peut occuper un certain volume à l'intérieur et s'ouvrir vers l'extérieur par basculement. En effet, ce module se situe sous l'encolure et ne gêne pas les chevaux même en saillie à l'intérieur du volume 18 pendant les déplacements. Il est ainsi intéressant d'y accéder à l'arrêt et de le mettre en saillie vers l'extérieur pour des raisons pratiques, notamment pour améliorer encore plus le confort du cheval.

Au droit de l'arrière train des chevaux, il est ménagé une paroi P'2 en plus de la paroi extérieure P2, qui est positionnée au droit du passage intérieur des roues, comme la paroi P'1 lorsqu' elle est en place, permettant d' intégrer ledit passage. Cette paroi s'élève sur une partie de la hauteur, préférentiellement du sol au plafond du van puisqu'elle est disposée derrière l'arrière train des chevaux.

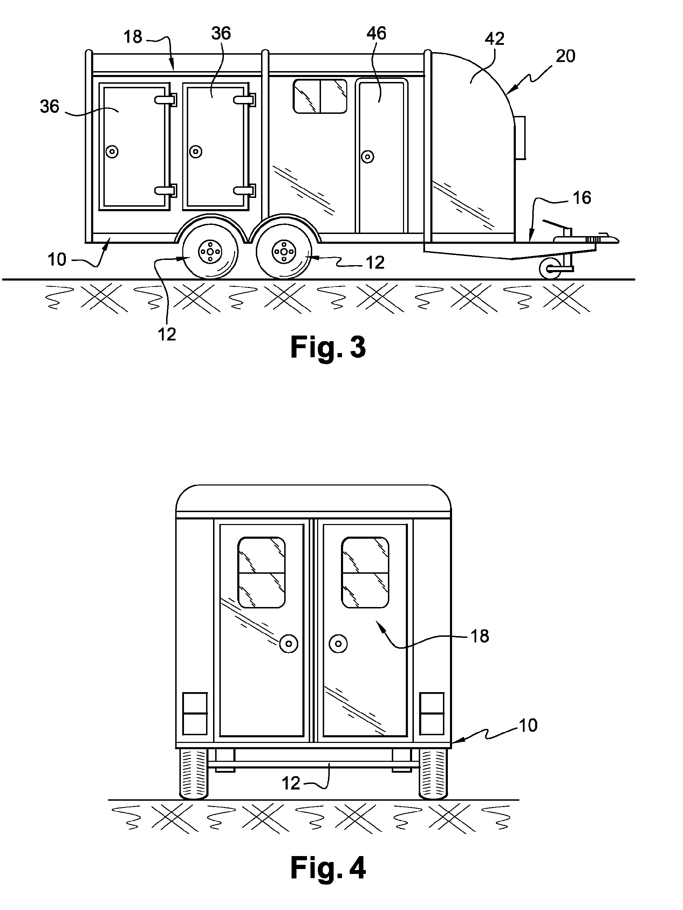

L'espace situe entre ces deux parois P2 et P'2, sensiblement de la largeur des passages de roues, peut être aménagé par exemple avec des rangements 34, accessibles de l'extérieur par des portes 36, plus visibles sur la figure 3. Ces rangements 34 peuvent recevoir tout ou partie des accessoires et équipements nécessaires pour l'harnachement des chevaux.

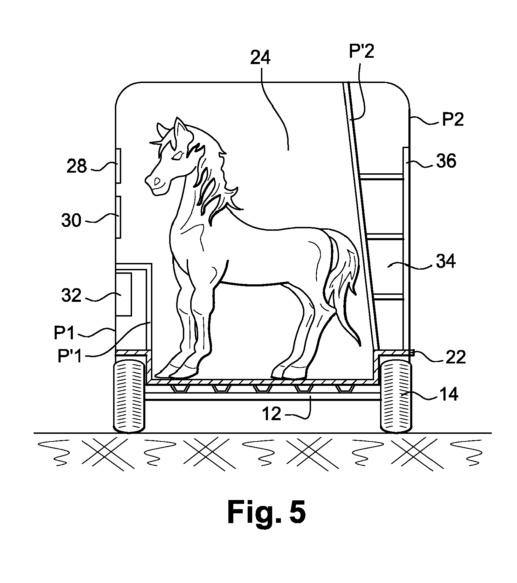

De façon perfectionnée, cette paroi P'2 est inclinée, du haut vers le bas par rapport à la paroi P2, voir figure 5. La paroi P'2 libère ainsi un volume plus important en partie haute sans pour autant perturber le confort des chevaux.

Les chevaux disposent alors en partie inférieure de plus de place pour écarter les postérieurs, notamment dans des mouvements de stabilisation lors du roulage. On note que cette paroi inclinée présente un autre avantage, celui de permettre au cheval de prendre appui avec son arrière train contre la paroi P'2 s'assurant une aide à la stabilisation. En effet, lorsque le cheval est en oblique et que cette paroi est inclinée, il dispose de plus de place pour reculer ses sabots. Son arrière train, côté droit, vient simultanément en appui sur cette même paroi.

Selon un perfectionnement de l'invention, il est possible de prévoir un décrochement D dans la paroi oblique de séparation des deux volumes 18 et 20. Ce décrochement, comme l'agencement de la paroi oblique, permet au cheval le plus en avant de disposer d'une place supplémentaire pour positionner son sabot arrière droit et écarter ainsi les postérieurs, améliorant de fait sa stabilité.

Le volume 18 comprend de façon connue et comme montré sur la figure 4, des portes arrière pour permettre l' entrée et la sortie des chevaux.

Le second volume 20 est un volume de service et ce volume peut être équipé comme représenté sur la figure 2 pour en faire un lieu de vie.

Il comprend tous les éléments nécessaires avec un cabinet de toilette 38 avec WC et douche et/ou un coin cuisine 40 avec un espace repas/détente 42 et/ou des rangements 44.

Un accès indépendant est prévu latéralement grâce à une porte 46. Afin de pouvoir apporter une certaine quantité de lumière du jour, de pouvoir aérer cet espace de vie, une fenêtre 48 est ménagée sur la paroi frontale au-dessus de la flèche.

On constate que cette réalisation permet de disposer une fenêtre sans courbure, c'est-à-dire une fenêtre du commerce, plane.

La forme de cette partie avant du second volume est tout à fait particulière pour permettre d'atteindre le meilleur compromis volume/aérodynamisme. En effet, les parois latérales sont planes, seule la partie frontale est courbée en partie haute, la partie frontale basse étant également plane.

Ceci permet de conférer, en plus de l'esthétique, un certain aérodynamisme sans sacrifier au volume intérieur, notamment à la hauteur de l'espace repas/détente. Il est ainsi possible de se mouvoir sur toute la surface du plancher et de s'asseoir en s'adossant à la partie avant sans être perturbé par la forme de la paroi ou par la hauteur disponible à cet endroit.

On constate que le plancher est utilisé au maximum de sa longueur et de sa largeur hors tout sans que les chevaux n'aient à pâtir d'une quelconque exiguïté.

En fonction de la législation et de la largeur autorisée hors tout pour le gabarit routier, il peut être attractif de rentabiliser l'espace disponible conformément à la présente invention.

Cette solution est également économique en plus d'être pratique. On constate aussi que le ou les cavaliers restent près de sa ou de leurs montures, ce qui est particulièrement satisfaisant surtout en ambiance de compétition.

Le poids engendré par la présence de ce lieu de vie est négligeable vis-à-vis du poids de la remorque en elle-même et de celui des chevaux.

## Revendications

1. Van comprenant un châssis (10), avec au moins un essieu (12) et des roues (14), comprenant un premier volume (18) prévu pour accueillir des chevaux (26), volume qui intègre les roues (14) et présente une largeur hors tout égale à la distance séparant l'extérieur d'une roue (14) d'un essieu (12) de l'extérieur de l'autre roue du même essieu, **caractérisé en ce qu'** il comprend au moins sur un côté, une paroi (P1, P2) disposée au droit de l'extérieur des roues et une paroi (P'1, P'2) disposée au droit de l'intérieur des roues, les chevaux étant disposés de façon oblique par rapport à l'axe de déplacement avec la paroi P'1 disposée sous l'encolure des chevaux et la paroi P'2 disposée derrière l'arrière train des chevaux (26).

2. Van selon la revendication 1, **caractérisé en ce que** la paroi P'2 est inclinée par rapport à la paroi P2.

3. Van selon la revendication 1 ou 2, **caractérisé en ce qu'**il comprend au droit des roues, sur un côté, deux modules (30) et (32) à ouverture en saillie sur l' extérieur.

4. Van selon l'une quelconque des revendications précédentes, **caractérisé en ce qu'**il comprend, dans l'espace entre les parois P2 et P'2, des rangements (34) avec des portes (36) accessibles de l'extérieur.

5. Van selon l'une quelconque des revendications précédentes, **caractérisé en ce qu'**il comprend un second volume (20) constituant un espace de service.

6. Van selon la revendication 5, **caractérisé en ce que** le second volume (20) constituant un espace de service est disposé devant le premier volume (18) .

7. Van selon la revendication 5 ou 6, **caractérisé en ce que** le volume (20) est équipé d'un cabinet de toilette (38) avec WC et douche et/ou d'un coin cuisine (40) avec un espace repas/détente (42) et/ou des rangements (44).

8. Van selon la revendication 5, 6 ou 7, **caractérisé en ce que** l'avant du volume (20) est plan latéralement et sur la partie frontale basse avant, la partie haute avant étant courbe.

9. Van selon la revendication 7, **caractérisé en ce que** le volume (20) comprend une porte (46) d'accès, indépendante.

10. Van selon la revendication 1 et 5, **caractérisé en ce que** la paroi de séparation des volumes (18) et (20) comprend un décrochement D.
